(19) Europäisches Patentamt
European Patent Office
Office européen des brevets

(11) Veröffentlichungsnummer: **0 230 913 B1**

(12) **EUROPÄISCHE PATENTSCHRIFT**

(45) Veröffentlichungstag der Patentschrift: **04.12.91**

(51) Int. Cl.⁵: **B09B 1/00**

(21) Anmeldenummer: **87100435.4**

(22) Anmeldetag: **15.01.87**

(54) **Verfahren zur Vorbehandlung von festen und zu verfestigenden Abfallstoffen zur Einführung in untertägige Salzhohlräume oder Salzkavernen über ein Fallrohr im freien Fall.**

(30) Priorität: **20.01.86 DE 3601428**

(43) Veröffentlichungstag der Anmeldung:
**05.08.87 Patentblatt 87/32**

(45) Bekanntmachung des Hinweises auf die Patenterteilung:
**04.12.91 Patentblatt 91/49**

(84) Benannte Vertragsstaaten:
**DE FR NL**

(56) Entgegenhaltungen:
**DE-A- 2 225 664**
**DE-A- 2 810 173**
**DE-A- 3 426 960**
**GB-A- 326 932**
**US-A- 4 398 956**

**PATENT ABSTRACTS OF JAPAN, Band 8, Nr. 7 (C-204)[1444], 12. Januar 1984; & JP-A-58 174 233 (TAIHEIYOU KINZOKU K.K.) 13-10-1983**

**PATENT ABSTRACTS OF JAPAN, Band 6, Nr. 174 (C-123)[1052], 8. September 1982; & JP-A-57 87 881 (MAEDA SETSUKEI K.K.) 01-06-1982**

(73) Patentinhaber: **WINTERSHALL AKTIENGESELLSCHAFT**
**Postfach 10 40 20 Friedrich-Ebert-Strasse 160**
**W-3500 Kassel(DE)**

(72) Erfinder: **Jahn-Held, Wilhelm, Dr.**
**Schoene Aussicht 8**
**W-3513 Staufenberg(DE)**
Erfinder: **Lindoerfer, Walter, Dr.**
**Christian-Beyer-Strasse 16**
**W-3500 Kassel(DE)**
Erfinder: **Wartenpfuhl, Friedel, Dr.**
**Finkenstrasse 43**
**W-3208 Giesen(DE)**

(74) Vertreter: **Springer, Hans Jörg, Dr. et al**
**BASF Aktiengesellschaft Patentabteilung**
**Carl-Bosch-Strasse 38**
**W-6700 Ludwigshafen(DE)**

**EP 0 230 913 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft ein Verfahren zur Vorbehandlung von festen und zu verfestigenden Abfallstoffen zur Einführung in untertägige Salzhohlräume oder Salzkavernen über ein Fallrohr im freien Fall.

Zur Verbesserung der Entsorgung von Abfallstoffen und damit zur Erhaltung des Gleichgewichtes in der Natur ist bei zunehmender Erdbevölkerung die sichere Deponie aller anfallenden Abfallstoffe von erheblicher Bedeutung.

Der technologische Stand der Technik hat sich seit einigen Jahren mit der Untertage-Deponie in Hohlräumen und Salzkavernen für flüssige, pumpfähige Abfallstoffe, denen auch feste Abfallstoffe beigemischt werden können, befaßt. Die deutsche Offenlegungsschrift 31 41 884 hat die Endlagerung von pumpfähigen Abfallstoffen in Kavernen von Salzlagerstätten zum Gegenstand, die in der Salzlagerstätte verfestigt werden. Die deutsche Patentschrift 31 41 885 hat ein Verfahren zum Einlagern von ganz oder teilweise wiederverwendbaren, flüssigen Abfallstoffen in untertägige, salzumschlossene Hohlräume bzw. Salzkavernen zum Gegenstand. Solche flüssigen Abfallstoffe sollen aus ungesättigten, kontaminierten Lösungen, aus verbrauchten Säuren, Phosphat-Schlämmen, Dünnsäure, bestehen. Diesen vorwiegend aus Schlämmen bestehenden, flüssigen Abfallstoffen sollen pastöse oder bituminöse oder auch feste Abfallstoffe zudosiert werden.

Wesentlich für diesen Stand der Technik ist die Erhaltung des pumpfähigen, also des flüssigen Zustandes des Gemisches der untertägig zu deponierenden Abfallstoffe.

Die deutsche Patentanmeldung 34 26 960 hat ein Verfahren zur Deponierung von feinteiligen, festen Abfallstoffen in untertägigen, salzumschlossenen Hohlräumen, insbesondere in Salzkavernen, zum Gegenstand. Die feinteiligen, festen Abfallstoffe werden durch senkrechte Rohrleitungen zum Befüllen des Hohlraumes eingerieselt. Zur Vermeidung der Staubbildung werden die freirieselnden Gemische vor oder während des Einrieselns mit staubbindenden Mitteln behandelt. Als solche sollen wäßrige Lösungen hygroskopischer Salze, flüssiges Paraffin oder flüssiges Silikonöl zugemischt werden. Als feste Abfallstoffe werden solche beschrieben, die bei der Verbrennung von Hausmüll entstehen. Diese festen Abfallstoffe sind 30 bis 40 Gew.-% der Einsatzmenge. Es findet also bei der Müllverbrennung nur eine Reduzierung des Volumens der Feststoffe statt, die mit der Erzeugung von toxischen und/oder umweltschädigenden Bestandteilen verbunden ist. Als feste Abfallstoffe werden auch solche beschrieben, die aus der Verbrennung in Kraftwerken oder in Industrieanlagen entstehen. Bei der Reinigung der Rauchgase entstehen schädliche Flugstäube und in den Verbrennungsanlagen feste Schlacken mit Gehalten an löslichen Stoffen und an langsam löslichen, toxisch auf den Untergrund und auf das Grundwasser wirkenden Schwermetallen.

Die Deponie derartiger fester Abfallstoffe auf obertägigen Deponien erfordert erhebliche Aufwendungen und Überwachungen zur Verhinderung des Absickerns von kontaminierten Wässern aus Niederschlägen oder aus fließenden Wässern. Diese kontaminierten Wässer müssen aufgefangen und wieder für sich entsorgt und deponiert werden.

In den untertägigen Grubenbauwerken können feste, schadstoffhaltige Abfallstoffe ebenfalls nur im beschränkten Umfang deponiert werden. Dazu sind außerdem lecksichere Umhüllungen erforderlich. Der Deponie von festen Abfallstoffen in sicheren untertägigen Hohlräumen und Salzkavernen kommt deshalb zunehmende, volkswirtschaftliche Bedeutung zu. Nur in solchen untertägigen Hohlräumen und Salzkavernen können zukünftig und auf Dauer die anfallenden Mengen an festen Abfallstoffen sicher deponiert werden. Da Steinsalzlagerstätten weltweit bekannt sind, besteht die Möglichkeit, mit der vorhandenen Technologie das erforderliche Volumen für die Deponie auch fester Abfallstoffe in diesen Lagerstätten zu schaffen.

Die deutsche Offenlegungsschrift 34 11 998 hat ein Verfahren zum Ein-oder Endlagern von festen, kleinteiligen Abfallstoffen in Salzkavernen zum Gegenstand. Nach diesem Verfahren werden die festen Abfallstoffe zunächst mit Flüssigkeit zu einem pumpfähigen Gemisch vermischt. Als Flüssigkeit wird eine wäßrige Steinsalzlösung eingesetzt, die recyclisiert wird.

Feste Abfallstoffe sind beispielsweise trockene Rückstände aus der Müllverbrennung und aus der Kraftwerkverbrennung. Solche festen Rückstände sind auch Salzschlacken aus der Leichtmetallerzeugung sowie Härtesalzrückstände aus der Metallverarbeitung. Zu den festen Abfallstoffen gehören auch kontaminierte Böden aus Altdeponien oder aus Ölunfällen, sowie Filterstäube, Aschen, Schlakken aus industriellen Anlagen.

Der Erfindung lag daher die Aufgabe zugrunde, ein Verfahren zur Vorbehandlung fester und zu verfestigender Abfallstoffe zu entwickeln, damit diese direkt in freirieselnder Form über ein Fallrohr in die untertägige Deponie eingeführt werden können.

Diese Aufgabe wird erfindungsgemäß dadurch gelöst, daß feste, gegebenenfalls zerkleinerte, oder feinteilige bis feinstteilige Abfallstoffe mit Abfallsschlämmen in einem solchen Verhältnis vermischt werden, daß eine Masse resultiert, aus welcher Formkörper gegebenenfalls unter Zusatz von Bindemittel erzeugt werden, und zwar in einem Granulierverfahren als Granulate, Agglomerate, Pellets,

oder in einem Preßverfahren als Schülpen, und diese auf kleinstückige Preßlinge zerkleinert werden, und gegebenenfalls die Formkörper angetrocknet oder durchgetrocknet werden, und danach die im freien Fall rieselfähigen Formkörper in den Salzhohraum oder in die Salzkavernen eingerieselt werden, und darin ein Haufwerk bis zur weitgehenden Verfüllung aufbauen und gegebenenfalls der Salzhohlraum oder die Salzkaverne verschlossen wird.

Weitere Merkmale des erfindungsgemäßen Verfahrens sind Gegenstand der Unteransprüche.

Zu den Abfallstoffen gehören auch Schlämme mit Gehalten an Feststoffen, insbesondere mit 15 bis 35 Gew.-%. In großen Mengen fallen Gipsschlämme und Kalkschlämme an aus der Absorption von schwefelhaltigen Abgasen. Zu den zu deponierenden Schlämmen gehören beispielsweise auch Galvanikschlämme, sowie Phosphat-Schlämme und Metallschlämme. Das Verfahren der Erfindung bietet den technischen und wirtschaftlichen Vorteil, daß auch solche Feststoffe, die in Form von Schlämmen, Suspensionen, Dispersionen, Emulsionen und fällbaren Lösungen vorliegen, im Gemisch mit festen, trockenen Abfallstoffen deponiert werden können, ohne daß diese vorher entwässert werden müssen. Der technische Effekt des Verfahrens der Erfindung liegt also darin, daß feste Abfallstoffe in Kombination mit wasserhaltigen Schlämmen, Suspensionen, Dispersionen, Emulsionen und fällbaren Lösungen feste Feuchtmassen bilden, die in Agglomerate oder Granulate übergeführt werden können. Diese kleinteiligen Abfallstoffe können sicher in das Deponievolumen eingerieselt werden.

Nach dem Stand der Technik sind feste Abfallstoffe nur Beimischungen zu flüssigen, pumpfähigen Abfallstoffen. Dabei ist nicht in jedem Falle auszuschließen, daß durch zu hohe Feuchtigkeit, ungeeignete Korngrößen, unregelmäßige Dosierung der Schüttungen Turbulenzen im Fallrohr entstehen, die zu Anbackungen oder zu Verstopfungen der Rohrleitung und damit zur Betriebsstörung führen und aufwendige Maßnahmen zur Beseitigung der Querschnittsverengung erforderlich machen.

Durch das Verfahren der Erfindung wird auch die Zudosierung von staubbindenden Mitteln gegebenenfalls auf Feinanteile beschränkt. Das Verfahren der Erfindung gestattet durch die Agglomerierung oder Granulierung, die Abfallstoffe in praktisch staubfreier Form durch das Einführungsrohr in das Volumen des Hohlraumes oder der Kaverne einzuführen. Ein weiterer technischer Effekt des Verfahrens der Erfindung liegt darin, daß durch das Einrieseln fester, geformter Teilchen der Abfallstoffe in der Kaverne eine nicht oder nur im geringen Umfang kompressible Masse gebildet wird. Das Verfahren der Erfindung gestattet also die sichere Einführung der Abfallstoffe in das zu füllende Volumen und darin die Bildung fester, wenig oder nicht kompressibler Massen. Es wird durch diesen technischen Effekt die Konvergenz des Gebirgsdruckes beherrschbar. Dieser weitere technische Effekt des Verfahrens der Erfindung wird dadurch alternativ unterstützt, daß die erzeugten Agglomerate oder Granulate des Gemisches der Abfallstoffe durch Zusatzmittel eine höhere Druckfestigkeit bis zur Betonhärte erhalten. Dieser weitere technische Effekt des Verfahrens der Erfindung wird auch dadurch alternativ unterstützt, daß die erzeugten Agglomerate oder Granulate des Gemisches der Abfallstoffe durch Zugabe von Beschwerungsmitteln zur Feuchtmasse vor der Agglomerierung oder Granulierung ein höheres Schüttgewicht erhalten. Dieser weitere technische Effekt besteht also darin, daß die Masse der in das zu füllende Volumen einzubringenden Abfallstoffe ein höheres "spezifisches Gewicht" und eine höhere Festigkeit erhält und damit dem "spezifischen Gewicht" und der Festigkeit des umgebenden Salzgesteins angepaßt oder gar noch erhöht wird. Durch diese alternative Maßnahme wird praktisch die auftretende Konvergenz vermieden und ein langsames Zusammendrücken des Kavernenvolumens verhindert. Das Verfahren der Erfindung verbessert somit die Sicherheit der Untertage-Deponie erheblich. Das Verfahren der Erfindung versteht unter Granulaten im Aufbau- oder Preß-Verfahren erzeugte, kleinteilige Formkörper ähnlicher Dimension. Dieses versteht unter Agglomeraten kleinteilige, stückige, unregelmäßige Formkörper, die durch Aufbaumaßnahmen mit Hüllmassen erzeugt werden. Dieses versteht unter Pellets vorbestimmte, kleinteilige Formkörper vorwiegend von zylindrischer oder hügeliger Form. Die nach dem Verfahren der Erfindung durch Vorbehandlung erzeugten, freirieselnden Abfallstoffe weisen im allgemeinen statistische Durchmesser von über 1 mm bis etwa 50 mm in verschiedenen Fraktionen auf.

Das Verfahren der Erfindung wird durch folgende Ausführungsbeispiele erläutert:

Beispiel 1

1000 kg Elektrofilterstäube aus der Müllverbrennung mit einem aerodynamischen Durchmesser <10 $\mu$m mit folgenden Gehalten an Schwermetallen: Cr 300; Cd 500; Cu 1.400; Pb 8.000; Zn 20.000 mg/kg werden mit 120 kg Gipsschlamm der chemischen Industrie mit einem Feststoffgehalt von 30 Gew.-% im Lödige-Mischer vermischt und danach auf einem Tellergranulator der Aufbau-Granulation unterworfen und danach getrocknet. Zur Erhöhung der Bindewirkung und Festigkeit der Granulate wird der Gesamtwassergehalt mit einer wäßrigen $MgSO_4$-Lösung mit einem Gehalt von 6

Gew.-% $MgSO_4$ auf etwa 10 %, auf die Trockenmasse gerechnet, eingestellt. Die Zugabe der $MgSO_4$-Lösung erfolgt während der Granulation durch Aufdüsen. Es werden von dem Tellergranulator Granulate abgezogen, die zu etwa 80 % im Kornbereich von 1 bis 10 mm und zu etwa 15 % über 10 mm durchschnittlichen Kornbereich aufweisen. Die Menge von etwa 5 % unter 1 mm wird in die Aufgabe zurückgeführt. Es wird die Druckfestigkeit in der Dimension "kg/Granulatkorn" mit und ohne Zusatz der $MgSO_4$-Lösung nach folgender Methode ermittelt: Die Druckfestigkeit wird nach folgender Methode unter Einsatz eines mikroprozeßorgesteuerten Tablettenbruchfestigkeitstesters der Firma RWK - Apparatebau GmbH, Heusenstamm - ermittelt. Es wird in diesem Modellversuch ohne Zusatz von $MgSO_4$-Lösung eine "Druckfestigkeit" von 5 kg und mit $MgSO_4$-Lösung von 8 kg/Korn der getrockneten Granulate ermittelt. Die Zugabe von $MgSO_4$-Lösung als Bindemittel bei der Granulation führt also zu härteren Granulatoren. Diese Zugabe ist besonders dann vorteilhaft, wenn $MgSO_4$-Lösung als solche oder als sogenannte "Endlauge" der Kaliindustrie zur Verfügung steht. Es wird durch diese Zudosierung auch die Möglichkeit gegeben, den Abstoß an dieser Endlauge in die Flüsse zu verringern. Es besteht durch diese Zudosierung der Bindemittellösung der weitere Vorteil, daß bei der Einstellung der Feuchtmasse gemäß dem Verfahren der Erfindung noch weitere Mengen an Feststoffen in Form von Abfallstoffen zugemischt werden können. Das erzeugte Feuchtgranulat wird in einer nachgeschalteten Verfahrensstufe oberflächlich in einem Drehrohrofen angetrocknet und dann in einem Modellversuch durch eine senkrechte Rohrleitung von 3 m Länge mit einem Durchmesser von 20 cm im freien Fall "eingerieselt". Es werden keine Anbackungen an der eisernen Rohrleitung festgestellt. Durch die Zudosierung von Härtungsmitteln, wie Portlandzement, gebrannter Dolomit, Wasserglas wird eine weitere Steigerung der Druckfestigkeit erzielt.

Beispiel 2

100 kg Rückstand einer Rauchgasreinigung mit einer Zusammensetzung von etwa 20 $CaCl_2$, 25 $CaSO_3/CaSO_4$, 55 feinstteiliger Flugstaub (Gew.-%) werden mit 100 kg zerkleinertem Rückstand einer Kraftwerksverbrennungsanlage und mit 50 kg verbrauchter Filtermasse der Mineralölindustrie unter Zugabe von etwa 80 kg Phosphatschlamm mit einem Feststoffgehalt von etwa 30 % und von etwa 15 kg Staubkieserit ($MgSO_4$) in einer Mischvorrichtung vermischt, und das Feuchtgut auf eine Kollerstrangpresse aufgegeben und durch horizontale Matrizen gepreßt. Es werden Pellets mit 10 mm Durchmesser von etwa 40 mm Länge erzeugt, die in einem Modellversuch durch die Rohrleitung des Beispiels 1 im freien Fall hindurchrieseln.

Dieses Beispiel demonstriert die Herstellung von Pellets aus der Mischung mehrerer, fester Abfallstoffe mit einem Schlammprodukt. Durch die Zudosierung von feinteiligem Staubkieserit wird außerdem die Abriebbeständigkeit und die Druckfestigkeit erhöht. Es ist alternativ möglich, auch Härtungsmittel, wie CaO, Sorel-Zement ($MgO$ + $MgCl_2$) zur weiteren Erhöhung der Druckfestigkeit zuzusetzen.

Beispiel 3

Es wird ein Gemisch von 100 kg Abfallstoffen, bestehend aus zerkleinerten oder feinteiligen Salzschlacken der Leichtmetall-Herstellung, Al-Krätze aus der Aluminium-Erzeugung, Stäuben aus der Aufbereitung von Schlacken hergestellt und dieses einer Drehrohrtrommel unter gleichzeitiger Zudosierung von etwa 30 kg Bariumsulfat-Schlamm aus der Herstellung von Chlorprodukten der Chemischen Industrie und von 5 kg CaO aufgegeben. Bei der Granulierung in der Drehtrommel mit inneren Transportorganen wird ein Wassergehalt von 8 bis 15 %, auf die Gesamtmischung gerechnet, eingestellt. Das Feuchtgut wird zur Vermeidung des Verbackens in der gleichen Drehtrommel oberflächlich durchgetrocknet. Es wird ein Agglomerat als rieselfähiges Abfallprodukt des Kornbereiches von etwa 5 - 20 mm Durchmesser erzeugt. Die Druckfestigkeit der Agglomerate wird durch Zugabe von gebranntem Kalk (CaO) oder von gebranntem Dolomit ($CaO \cdot MgO$) in einer Menge von etwa 5 % erhöht. Die Vermischung der Komponenten kann vor der Granulierung oder direkt in der Drehtrommel erfolgen.

Beispiel 4

Es werden 10 kg Produktionsabfallstoffe von Pflanzen mit einer Hüllmasse agglomeriert, die aus einer wäßrigen Lösung von Kalkschlamm in einer Menge von etwa 2 kg Wasser mit Zusätzen von 1 kg feinteiligem Bentonit als Bindemittel, 1 kg expandiertem Vermiculit als Adsorptionsmittel und von 0,2 kg Methylcellulose besteht. Die Produktionsabfälle sind vor der Behandlung in feinteilige Teile zerkleinert. Die Agglomerierung wird in einem Dragierkessel durchgeführt. Das erzeugte Agglomerat wird mit Warmluft getrocknet, und dieses kann freirieselnd durch Rohrleitungen untertägig deponiert werden.

Beispiel 5

Es werden 100 kg kontaminiertes Ammoniumsulfat, $(NH_4)_2SO_4$, und 5 kg verbrauchte anorganische Filtermasse mit 8 kg eines Abfallschlammes mit Gehalt an Eisensulfat, $FeSO_4$, und mit 3 kg gebranntem Kalk, CaO, einer Walzenpresse aufgegeben und mit 300 kg/cm$^2$ zu Schülpen verpreßt. Das Schülpengut wird danach zu kleinstückigen Preßlingen zerkleinert. Diese stückigen Abfallstoffe können freirieselnd durch ein senkrechtes Rohr als Modell für ein Einleitungsrohr hindurchgeleitet und als Haufwerk aufgeschüttet werden.

Beispiel 6

Es wird eine Mischung von 30 kg zerkleinerter Schlacke aus einer Verbrennungsanlage, 40 kg Flugasche, 30 kg Klärschlamm und 3 kg Portlandzement hergestellt und diese als Feuchtgut einer Drehtrommel aufgegeben und in dieser granuliert. Das erzeugte Granulat wird ohne Absiebung einer Trockentrommel zugeführt und in dieser getrocknet. Das erzeugte Granulat eines Kornbereiches von 2 - 20 mm wird durch eine Rohrleitung als Modellversuch als rieselfähiges Abfallprodukt in ein Auffanggefäß als Hohlraum im freien Fall eingeleitet und in diesem angehäuft. Es kann zur Erhöhung der Ausbeute an Granulat auch $MgCl_2$- oder $MgSO_4$-, oder Alkalisilikat-Lösung zudosiert werden.

Beispiel 7

Es wird eine Mischung aus Abfällen von Mineralfasern der Glaswolle-Erzeugung, von ölhaltigen Adsorptionsmitteln der Ölabscheidung aus wäßrigen Lösungen, sowie von Dicalciumphosphat-Schlamm der chemischen Industrie als Feuchtgut mit etwa 6 % Wasser in einem Zwangsmischer erzeugt. Das Mischgut wird einem Tellergranulator aufgegeben und auf diesem durch Aufsprühen mit flüssigem Schwefel einer Temperatur oberhalb des Schmelzpunktes von etwa 140° C granuliert und oberflächlich gehärtet und in einer nachgeschalteten Kühltrommel auf Lagerstättentemperatur von etwa 70° C abgekühlt und dann freirieselnd durch eine senkrechte Rohrleitung in ein Sammelgefäß eingeführt. Das Verfahren der Erfindung kann mit vorgewärmtem Granuliergut und auch in beheizter Granuliervorrichtung durchgeführt werden.

Beispiel 8

100 kg Filterstäube und 50 kg zerkleinerte Schlacken, beide aus einer Müllverbrennungsanlage, und 1 kg kommunaler Klärschlamm werden mit 90 kg Harnstoff-Formaldehyd-Kondensationsprodukt mit 38 % N-Gehalt in einer Granulierschnecke granuliert, danach in einer Trockentrommel unterhalb der Erweichungstemperatur des synthetischen Harzes getrocknet und ein freirieselndes Abfallprodukt des Kornbereiches von etwa 2 - 15 mm und 10 % Unterkorn erzeugt. Das Feingut wird in das Aufgabegut für die kontinuierliche Aufgabe recycliert. Die Granulatgröße ist von der Granulierzeit abhängig. Die Vorbehandlung gemäß dem Verfahren der Erfindung kann chargenweise oder über vorbestimmte Zeiten kontinuierlich durchgeführt werden. Es ist vorteilhaft, der Einrieselung im freien Fall eine geeignete Stapelung oder Pufferung vorzuschalten, um das Einrieseln dadurch gleichmäßig durchführen zu können.

Die Steuerung der Granulatgröße erfolgt im allgemeinen über die Flüssigkeitsmenge, die Zeitdauer und durch die Einstellung technologischer Maßnahmen der Behandlungsvorrichtung. Das Feingut wird im allgemeinen dem Mischgut wieder aufgegeben. Es ist jedoch auch möglich, dieses mit Staubbindemitteln zu behandeln und mit den vorbehandelten Abfallstoffen einzurieseln. Das Einrieseln fester, vorbehandelter Abfallstoffe ist von den äquivalenten bzw. statistischen Durchmessern der vorbehandelten Formkörper abhängig. Es haben größere Partikel den Vorteil der geringeren Querschnittsbelastung des Einführungsrohres. Dem Fachmann ist es durchaus möglich, die gewünschte Größe und Form der Formkörper zu bestimmen, beispielsweise durch Vorversuche. Soweit nach dem Stand der Technik mehr oder weniger mit Schwermetallen kontaminierte Abfallstoffe mit Flugaschen oder hydraulischen Bindemitteln verfestigt werden, ist die Herstellung einer begehbaren, einheitlichen festen Masse auf obertägigen Deponien beabsichtigt. Selbst wenn derartige Deponien nach Untersuchungsergebnissen zunächst keine schadstoffhaltigen Sickerwässer ergeben, so stehen auf die Dauer keine ausreichenden Bodenflächen für die Errichtung von obertägigen Deponien zur Verfügung.

Es ist verlockend, den Anfall von Klärschlämmen mit Flugaschen und hydraulischen Bindemitteln zu verfestigen und auf obertägigen Deponien begehbar abzulagern. Die Versuche zum Nachweis von schadstofffreien Eluaten sind als Modellversuche oder als kurzzeitige Freilandversuche nicht ausreichend. Es wird dabei nicht der Einfluß der jahreszeitlichen Belastung besonders durch Kälte und Eisbildung berücksichtigt. Derartige Versuche zum Nachweis einer obertägigen Deponiefähigkeit sind auch nicht repräsentativ für eine Standhaftigkeit solcher Deponien über Jahrzehnte. Sobald sich aber im Laufe von Jahren wie in Erdformationen und Gesteinen Risse gebildet haben, kann Wasser eindringen, sprengend wirken und die Zerklüftung dadurch fördern, und es können dann nach Jahren oder Jahrzehnten unkontrollierbare, kontaminierte Sickerwässer entstehen, die das Grundwasser, Flüsse und das Erdreich als "Quelle" laufend oder periodisch schädigen.

Diese Gefahr läßt sich durch kurzzeitige Versuche bei gleichmäßigen Klimabedingungen nicht ausschließen. Dabei ist zu berücksichtigen, daß durch die Verwendung von Flugaschen als Bindemittel nur dann eine ausreichende Festigkeit der einheitlichen Masse erreicht wird, wenn gleichzeitig hydraulische Bindemittel zugesetzt werden. Die Zugabe von Flugaschen und Stäuben führt aber zu einer erhöhten Konzentration an Schwermetallen in der abgebundenen und aufgehaldeten Masse aus Abfallstoffen. Es wird dadurch das Risiko einer späteren Kontaminierung von eindringenden Sickerwässern erheblich größer. Es werden den Wässern Schwermetalle und andere umweltschädliche Ionen in mit Flugaschen abgebundenen Massen als "Konzentrat" angeboten bei einer sich über Jahre und Jahrzehnte erstreckenden Einwirkung von Wässern auf solche obertägigen Halden. Nach "Wasser, Luft und Betrieb", Zeitschrift für Umwelttechnik, Ausgabe 6.83, Seite 49-50, weist beispielsweise Neckarschlamm folgende Gehalte an Schwermetallen auf: 3,6 Fe; 460 Mn; 1055 Zn; 340 Cu; 700 Cr; 95 Ni; 240 Pb; 9,5 Co; 52 Cd; 20 As (ppm). Wenn derartige Schlämme mit Flugaschen aus Müllverbrennungsanlagen abgebunden werden, dann kommen noch weitere Mengen an umweltschädlichen Metallen hinzu, welche die Konzentration und auch die Menge insgesamt erhöhen. Nach "Wasser, Luft und Betrieb", 1.c, weist eine Flugasche aus der Müllverbrennung folgende Gehalte an Schwermetallen auf: Fe ($Fe_2O_3$) 50181; Pb (PbO) 3412; Zn (ZnO) 21406; Ni (NiO) 610; Cd (CdO) 133; Cr ($Cr_2O_3$) 2048; Cu (CuO) 1423 (mg/kg). Dieses erhebliche Risiko für eine zukünftige Umweltbelastung durch übertägige Deponien wird durch das Verfahren der Erfindung vermieden. Unter den Dimensionen der Granulate, Agglomerate, Pellets gemäß dem Verfahren der Erfindung werden solche verstanden, die eine solche statistische Größe aufweisen, daß das Einrieseln im freien Fall durch das Einführungsrohr möglich ist. Dieser "äquivalente Durchmesser" ist nach A.G.Kassatkin, Chemische Verfahrenstechnik, Bd. 1, 1962, Seite 54, wie folgt definiert:

$$D_{\text{äquiv.}} = \frac{2\ a \cdot b}{a + b} ,$$

wobei die Werte für a und b die meßbaren Dimensionen für Breite und Länge sind.

Das Verfahren der Erfindung bietet den technischen Vorteil, daß für die Kornfraktionen der vorbehandelten Teilchen aus Formkörpern weite Grenzen bestehen, und zwar soweit, daß die Rieselfähigkeit im freien Fall gewährleistet ist. Gerade bei der statistischen Kornverteilung von kleinen bis zu großen Formteilchen ergibt sich für das Verfahren der Erfindung der unerwartete technische Effekt, daß die Ausnutzung des Querschnittes der Einführungsleitung durch zuviel "Masse auf dem Querschnitt" praktisch nicht eintritt, und dadurch ein zu starkes Abfallen des statischen Druckes in der Rohrleitung vermieden wird. Die Erzeugung eines Druckabfalles im strömenden Medium ist aus dem Mitreißeffekt von Wasserstrahlpumpen bekannt. Es wird durch diesen technischen Effekt des Verfahrens der Erfindung das Risiko von Anbackungen oder von Verstopfungen praktisch vermieden. Das Verfahren der Erfindung bietet somit den Vorteil einer hohen Betriebssicherheit durch das Einrieseln von Formkörpern unterschiedlicher Korngröße mit abgestuften, äquivalenten Durchmessern.

Nach dem Verfahren der Erfindung wird die Ausbeute an Granulat oder Agglomerat durch Zugabe von Bindemitteln erhöht. Es werden alternativ und bevorzugt wäßrige Lösungen von Abfallösungen der Kaliindustrie eingesetzt, die einen Gehalt an $MgCl_2$ und $MgSO_4$ aufweisen. Derartige Salzlösungen aus dem Herstellungsprozeß der Kalidüngesalze werden als Abstoßlaugen bezeichnet. Dieser technische Ausdruck bedeutet, daß diese Lösungen nicht aufbereitet werden können wegen des dafür erforderlichen, zu hohen Energieaufwandes. Diese wäßrigen Lösungen müssen deshalb "abgestoßen" werden. Durch das Einleiten in Flüsse oder durch das Einpumpen in unterirdische Lagerstätten, wie in den Plattendolomit, werden die Flußläufe und Lagerstätten belastet. Für das Eindrücken in tiefere Erdformationen ist auch erhebliche Pumpenergie aufzubringen. Es bedeutet also einen technischen Vorteil für das Verfahren der Erfindung, wenn solche Salzlösungen, die ihrerseits in der überschüssigen Menge als Abfallstoffe zu bezeichnen sind, nach dem Verfahren der Erfindung mit festen Abfallstoffen der untertägigen Deponie zugeführt werden. Sofern aus höheren Gehalten an Wasser in den eingesetzten Schlämmen eine Teilmenge Wasser zu binden ist, wird vorteilhaft dafür wasserfreier Staubkieserit oder Kieserit, $MgSO_4 \cdot H_2O$, bei der Vorbehandlung zudosiert. Dieses Bindemittel bietet den technischen Vorteil, daß bevorzugt keine Nachtrocknung erforderlich ist. Die nach dem Verfahren der Erfindung eingesetzten Härtungsmittel erhöhen die Festigkeit der vorbehandelten Partikel als Formkörper. Die Erhöhung der Druckfestigkeit kann durch die Zusatzmenge dieser Mittel eingestellt werden. Es ist vorteilhaft, wenn das Mengenverhältnis durch Vorversuche ermittelt wird. Es können Festigkeiten mit Schlämmen, Flugaschen und Bindemitteln in Mengen von 3-10 Gew.-%, auf die Feststoffe bezogen, von 30 bis 50 oder bis 90 oder bis 130 und darüber als Druckfestigkeiten, $N/cm^2$, eingestellt werden. Sofern Flugaschen ohne Bindemittel mit festen Abfallstoffen und Schlämmen gemäß dem Verfahren

der Erfindung vermischt werden, ist je nach der Menge an Flugasche, insbesondere von etwa 85 % auf den Schlamm gerechnet, die Druckfestigkeit niedrig. Diese kann beispielsweise nur 0,5 bis 2,0 bar betragen. Durch eine Antrocknung nach der Vorbehandlung gemäß dem Verfahren der Erfindung kann diese Druckfestigkeit jedoch ausreichend sein für das Einrieseln im freien Fall in den Hohlraum oder in die Salzkaverne. Es kommt auch hydratisierenden Bindemitteln, vorzugsweise Staubkieserit, $MgSO_4$, gleichzeitig eine Härtungswirkung durch Erhöhung der Druckfestigkeit zu. Es genügen deshalb im allgemeinen geringe Mengen von 1-6 Gew.-% dieses Bindemittels für die Vorbehandlung zur Granulierung mit dem technischen Effekt der gleichzeitigen Erhöhung der Druckfestigkeit der Formkörper. Mit Zudosierung von Härtungsmitteln kann die Druckfestigkeit erheblich gesteigert werden. Für die sichere Durchführung des Verfahrens der Erfindung ist die Aufrechterhaltung der laminaren Strömung, insbesondere auch beim Abstellen des Einrieselns, erforderlich. Durch plötzliches Abstellen des Einrieselns oder durch zu rasche Reduzierung des Mengenstromes kann eine turbulente Strömung entstehen, die zum Verspritzen der Masse nach den Seiten an die Rohrwandung und damit zum Anbacken führt. Es können sich dabei im Extremfall sogar Verstopfungen bilden, die durch die Notwendigkeit der Beseitigung zu Betriebsstörungen und Unterbrechungen führen.

Durch die alternative und bevorzugte Steuerung der Einlaufkapazität der einrieselnden Abfallsstoffe und durch eine bevorzugte stufenlose und allmähliche Mengenreduzierung bis zum Abschalten und beim Anfahren des Einrieselns nach Abstellungen bei periodischen Einführen von vorbehandelten Abfallstoffen und durch Vermeidung einer zu hohen Querschnittsbelastung der Rohrleitung beim Einrieseln kann das Verfahren gemäß der Erfindung so gesteuert werden, daß die laminare Strömung beim Einrieseln aufrechterhalten bleibt, und daß diese nicht zu dicht an den kritischen Grenzwert herankommt.

Das Verfahren der Erfindung bietet für die Deponie fester oder verfestigter Abfallstoffe den technischen Vorteil der sicheren und unsichtbaren Deponie untertage in Hohlräumen und Salzkavernen, die in Salzlagerstätten in der erforderlichen Kapazität zur Verfügung stehen oder dafür ausgesolt werden können, und zwar auch auf die Zukunft gerechnet. Das Verfahren der Erfindung bietet die Möglichkeit, solche festen Abfallstoffe und Schlämme untertage zu deponieren, die in erheblichen und sogar in steigenden Mengen durch die Abgasreinigung anfallen und die übertage zukünftig nicht mehr auf Deponien abgelagert werden können, weil dafür keine Flächen mehr zur Verfügung stehen und weil die Gefahr einer Schadstoff-Belastung der Böden und Flüsse und des Grundwassers auf längere Zeiträume nicht auszuschließen ist. Das Verfahren der Erfindung bietet auch den technischen Vorteil, daß durch die Deponie der vorbehandelten Abfallstoffe, vorzugsweise mit Erhöhung der Druckfestigkeit und des spezifischen Gewichtes der Formkörper, die Konvergenz in Salzkavernen weitgehend aufgehoben werden kann, so daß diese zum Stillstand kommt. Es ist dadurch möglich, die mit festen Abfallstoffen weitgehend gefüllte Kaverne zu verschließen. Das Verfahren der Erfindung hat auch in Verbindung mit der alternativen Ausgestaltung für die als gefahrlos zu bezeichnenden Deponie fester oder verfestigter Abfallstoffe in untertägigen Hohlräumen und Salzkavernen insgesamt neben technischen Vorteilen auch erhebliche volkswirtschaftliche Bedeutung durch seinen Beitrag zur Schaffung einer sauberen Umwelt.

## Patentansprüche

1. Verfahren Zur Vorbehandlung von festen und zu verfestigenden Abfallstoffen zur Einführung in untertägige Salzhohlräume oder Salzkavernen über ein Fallrohr im freien Fall, dadurch gekennzeichnet, dass feste oder feinteilige bis feinstteilige Abfallstoffe mit Abfallschlämmen in einem solchen Verhältnis vermischt werden, dass eine Masse resultiert, aus welcher Formkörper erzeugt werden und zwar in einem Granulierverfahren als Granulate, Agglomerate, Pellets oder in einem Pressverfahren als Schülpen und diese auf kleinstückige Presslinge zerkleinert werden und danach die im freien Fall rieselfähigen Formkörper in den Salzhohlraum oder in die Salzkaverne eingerieselt werden und darin ein Haufwerk bis zur weitgehenden Verfüllung aufbauen und der Salzhohlraum oder die Salzkaverne verschlossen wird.

2. Verfahren nach Anspruch 1, dadurch gekennzeichnet, daß das Verhältnis feste Abfallstoffe : Abfallschlämmen etwa 60 : 40 bis 95 : 05, oder 80 : 20 Gew.-%, auf die Summe der Stoffe als 100 Gew.-% gerechnet, beträgt.

3. Verfahren nach einem oder mehreren der Ansprüche 1 und 2, dadurch gekennzeichnet, daß als Bindemittel wäßrige Salzlösungen oder verflüssigtes Bitumen oder verflüssigtes Paraffin oder wäßrige Dispersionen oder Emulsionen dieser Stoffe oder feinteiliger Bentonit oder Methylcellulose oder geschmolzene Stoffe, wie Schwefel, oder $MgCl_2$ oder $MgSO_4$ oder Kieserit oder deren wäßrige Lösungen oder Endlaugen der Kaliindustrie zudosiert werden, und gegebenenfalls die Bindewirkung von Abfallsschlämmen durch Zugabe fester, feinteiliger

Bindemittel erhöht wird.

**4.** Verfahren nach den Ansprüchen 1 bis 3, dadurch gekennzeichnet, daß den trockenen Abfallstoffen eine solche Menge wäßriger Salzlösung zudosiert wird, daß der Wassergehalt der Gesamtmenge der trockenen Abfallstoffe, auf diese gerechnet, 1 bis 15 Gew.-%, oder 2 bis 10 Gew.-% beträgt, oder festen Abfallstoffen Abfallschlämme in Form von Suspensionen, Dispersionen, Emulsionen, Lösungen zugemischt werden unter Einstellung des gleichen Feststoffgehaltes, derart, daß die Feuchtmasse erhalten bleibt.

**5.** Verfahren nach einem oder mehreren der Ansprüche 1 bis 4, dadurch gekennzeichnet, daß feste Abfallstoffe aus Filterstäuben, Flugaschen, Schlacken, Rückständen der Müllverbrennung oder der Kraftwerkverbrennung oder sonstigen industriellen Prozessen, oder aus mit Schadstoffen kontaminierten anorganischen Salzen oder aus mit Ölen oder Schwermetallen belasteten Erden oder aus pastösen Stoffen oder organischen Abfallstoffen bestehen.

**6.** Verfahren nach einem oder mehreren der Ansprüche 1 bis 5, dadurch gekennzeichnet, daß Abfallschlämme aus Gips- oder Kalk- oder Nitrat-oder Nitrit- oder aus Phosphat- oder aus Metall-Schlämmen bestehen, und/oder der Feststoffgehalt der Schlämme gleichmäßig eingestellt ist und/oder Abfallschlämme einen Feststoffgehalt von 10 bis 40 Gew.-%, oder von 15 bis 35 Gew.-% aufweisen und/oder bei geringen Gehalten an Feststoffen in den Abfallstoffen, die Feuchtmasse durch Zugabe von Adsorptionsmitteln, wie Kieselgur, expandierter Vermiculit, expandierter Perlit, eingestellt wird, und/oder Abfallschlämme aus feinteiligen Abfallstoffen und wäßrigen Lösungen hergestellt und als Mischkomponente eingesetzt werden und/oder Abfallschlämme durch Zugabe fester, feinteiliger Abfallstoffe auf einen konstanten Feststoffgehalt eingestellt werden.

**7.** Verfahren nach den Ansprüchen 1 bis 6, dadurch gekennzeichnet, daß die Agglomeration oder Granulierung der Feuchtmasse der Abfallstoffe durch Aufbaugranulierung mit Drehrohrtrommeln oder mit Drehtellern oder mit Schwingsieben, und durch Zwangsgranulierung mit Pressen zu Pellets oder zu Schülpen und deren Zerkleinerung in kleinstückige Abfallstoffe als Preßlinge, oder die Zwangsgranulierung mit Schneckenpressen und Zerkleinerung der austretenden Masse erfolgt.

**8.** Verfahren nach einem oder mehreren der Ansprüche 1 bis 7, dadurch gekennzeichnet, daß die Trocknung der festen Abfallstoffe durch heiße Luft oder durch Flammgase im Gleichstrom oder im Gegenstrom erfolgt bei einer Temperatur, die keine Veränderung der Agglomerate oder Granulate oder der kleinstückigen Abfallstoffe bewirkt, und die mit Wasserdampf gesättigte Luft abgeführt wird.

**9.** Verfahren nach einem oder mehreren der Ansprüche 1 bis 8, dadurch gekennzeichnet, daß das Einrieseln der Agglomerate oder Granulate oder stückigen Abfallstoffe durch Steuerung der Einlaufkapazität als Durchsatzmenge pro Zeiteinheit erfolgt und/oder das Einlaufrohr zum Einrieseln der vorbehandelten festen Abfallstoffe mit dem Fortschritt der Füllung des Hohlraum-oder Kavernen-Volumens hochgezogen wird und/oder das Einrieseln der festen, vorbehandelten Abfallstoffe periodisch erfolgt und in den Zwischenzeiten flüssige Abfallstoffe oder wäßrige Abfallösungen oder wäßrige Lösungen oder Wasser in so begrenzter Menge eingeführt wird, daß der Kegel fester Abfallstoffe abgebaut wird.

**10.** Verfahren nach einem oder mehreren der Ansprüche 1 bis 9, dadurch gekennzeichnet, daß in den Zwischenzeiten zwischen dem Einrieseln der vorbehandelten Abfallstoffe auf dem eingerieselten Volumen der Abfallstoffe eine oder mehrere Deckschichten höherer Festigkeit ausgebildet werden, die aus abgebundenen oder ausgehärteten Massen bestehen und/oder die höhere Festigkeit der Deckschichten mit hydraulischer Bindung oder mit Sorel-Bindung oder mit Kunstharz-Bindung eingestellt wird und/oder die die höhere Festigkeit der Deckschichten bewirkenden Massen trokken in die Kaverne eingeführt und erst in dieser zur Reaktion gebracht werden durch Zugabe der wäßrigen Phase oder der die Aushärtung bewirkenden Komponente.

**11.** Verfahren nach den Ansprüchen 1 bis 10, dadurch_gekennzeichnet, daß rieselfähige Formkörper, wie Agglomerate, Granulate höherer Festigkeit durch Zugabe von Härtungsmitteln hergestellt und als solche Zement, Portland-, Sorel-Zement, Al-Phosphat, $NH_4$-Phosphat, Kieselerde, disperse Kieselsäure, Alkalisilikat, gebrannter Magnesit (MgO), gebrannter Dolomit (MgO•CaO), gebrannter Kalk (CaO), Wasserglas, Kunstharze, Epoxyharz, Harnstoff-, Melamin-, Phenolformaldehyd-Harze und die Kombination dieser anorganischen und organischen Stoffe verwendet werden.

**12.** Verfahren nach einem oder mehreren der Ansprüche 1 bis 11, dadurch gekennzeichnet, daß das Raumgewicht (g/l) der Agglomerate oder Granulate durch Zudosierung von Metallabfällen, wie von Eisenabfällen, oder von schwerer anorganischer Masse, wie Schwerspat, oder von Schwermetallsalzen, wie $FeSO_4$, erhöht wird.

**13.** Verfahren nach einem oder mehreren der Ansprüche 1 bis 12, dadurch gekennzeichnet, daß solchen Abfallstoffen und deren Gemischen, die zu biologischen Aktivitäten führen und damit zur Bildung von Gasen, bakterizide Mittel zugesetzt werden zur Verhinderung von solchen Umsetzungen und/oder den festen, einrieselnden Formkörpern Staubbindemittel zugesetzt sind zur Vermeidung oder Verminderung der Staubbildung beim Auftreffen im unteren Volumen des Hohlraumes oder der Salzkaverne und/oder den festen, einrieselnden Abfallstoffen Stoffe mit thixotropher Wirkung, wie Bentonite, zudosiert oder solche Stoffe für sich in den Hohlraum oder die Salzkaverne eingerieselt und diese darin durch den Preßdruck der deponierten Abfallstoffe oder gegebenenfalls durch Einführen von wäßrigen Flüssigkeiten in den thixotrophen Zustand übergeführt werden zur Ablenkung der vertikalen Konvergenzvektoren.

**14.** Verfahren nach einem oder mehreren der Ansprüche 1 bis 13, dadurch gekennzeichnet, daß die Steuerung der Einlaufkapazität der einrieselnden Abfallstoffe so erfolgt, daß der Druckabfall durch die zunehmende Fallgeschwindigkeit des strömenden Materials nicht wesentlich abnimmt zur Vermeidung von Ablagerungen oder Schwingungen der Rohrleitung und/oder daß das Einlaufrohr zum Einrieseln der vorbehandelten, festen Abfallstoffe im oberen Teil des Hohlraumes oder der Salz kaverne kurz gehalten wird, um durch die Auftreffwucht im unteren Volumen die Bildung von Schüttkegeln durch eine Verteilwirkung zu vermeiden oder solche Schüttkegel abzuflachen.

**15.** Verfahren nach einem oder mehreren der Ansprüche 1 bis 14, dadurch gekennzeichnet, daß das gleichmäßige und kontinuierliche Einrieseln der festen Abfallstoffe derart erfolgt, daß eine laminare Strömung in der Rohrleitung aufrechterhalten bleibt und gegebenenfalls eine praktisch stufenlose Mengenreduzierung bis zum Abschalten des Einrieselns erfolgt zur Vermeidung der Ausbildung einer turbulenten Strömung und von Anbackungen oder Verstopfungen.

**16.** Verfahren nach einem oder mehreren der Ansprüche 1 bis 15, dadurch gekennzeichnet, daß Formkörper aus überwiegend anorganischen Abfallstoffen mit Bindemitteln und Flugaschen auf eine Druckfestigkeit von etwa 30 - 100 $N/cm^2$, gemessen nach 1 bis 3 Tagen, eingestellt werden oder gekennzeichnet, daß Formkörper mit Gehalt an organischen Abfallstoffen mit Bindemitteln und Flugaschen und gegebenenfalls mit anorganischen Adsorptionsmitteln auf eine Mindestdruckfestigkeit über 2 bis 5 $N/cm^2$, gemessen nach 1 bis 8 Tagen, eingestellt werden oder daß Abfallstoffe mit vorwiegend organischer Masse mittels einer Umhüllungsmasse in rieselfähige Agglomerate übergeführt werden.

**17.** Verfahren nach einem oder mehreren der Ansprüche 1 bis 16, dadurch gekennzeichnet, daß das Einrieseln im freien Fall der vorbehandelten Abfallstoffe mit einer solchen Belastung des Rohrquerschnitts erfolgt, daß dieser nur zwischen 50 - 80 % durch den äquivalenten Durchmesser der einrieselnden Formkörper belastet ist und dadurch der Druckabfall im unteren Teil des Fallrohres so gering ist, daß die laminare Strömung des Materials aufrechterhalten bleibt und/oder daß den einrieselnden Abfallstoffen vor dem Eintritt in die praktisch senkrechte Rohrleitung ein Förderorgan, wie ein gewölbtes Transportband oder eine Rinne vorgeschaltet ist, gegebenenfalls mit einer Begrenzung für die Schichthöhe zum Mengenausgleich und zur Mengenregulierung.

**18.** Verfahren nach Anspruch 1,dadurch gekennzeichnet, dass feste Abfallstoffe zerkleinert werden.

**19.** Verfahren nach Anspruch 1, dadurch gekennzeichnet, dass die Formkörper unter Zusatz von Bindemitteln erzeugt werden.

**20.** Verfahren nach Anspruch 1, dadurch gekennzeichnet, dass die Formkörper angetrocknet oder durchgetrocknet werden.

**Claims**

**1.** A process for the pretreatment of solid wastes, and wastes to be compacted, for introduction into underground salt cavities or salt caverns via a downpipe under the force of gravity, wherein solid or finely divided to very finely divided wastes are mixed with waste sludges in a ratio such that a material results from which moldings are produced, in the form of granules, agglomerates or pellets by a granulation method, or in the form of flakes by a pressing method, the flakes being comminuted to give small moldings, and the moldings which are free-flowing under the force of gravity are then trickled into the salt cavity or into the salt cavern and form a pile therein until the said cavity or cavern is substantially full, and the salt cavity or the salt cavern is closed.

**2.** A process as claimed in claim 1, wherein the weight ratio of solid wastes to waste sludges is about 60:40 to 95:05, or 80:20, based on the sum of the substances as 100% by weight.

**3.** A process as claimed in either of claims 1 and 2, wherein agueous salt solutions or liquid asphalt or liquid paraffin or aqueous dispersions or emulsions of these substances or finely divided bentonite or methylcellulose or molten substances, such as sulfur or $MgCl_2$ or $MgSO_4$ or kieserite or their aqueous solutions, or spent liquors from the potash industry are metered in as binders, and, if required, the binding effect of waste sludges is increased by adding solid, finely divided binders.

**4.** A process as claimed in any of claims 1 to 3, wherein aqueous salt solution is metered into the dry wastes in an amount such that the water content of the total amount of dry wastes is from 1 to 15% by weight, or from 2 to 10% by weight, based on the dry wastes, or waste sludges in the form of suspensions, dispersions, emulsions or solutions are mixed with solid wastes, the solids content being brought to the same value in such a way that the moisture content is maintained.

**5.** A process as claimed in one or more of claims 1 to 4, wherein solid wastes consist of filter dusts, fine ash, slags, residues from refuse incineration or from combustion at power stations or from other industrial processes, or of inorganic salts contaminated with harmful substances, or of earths polluted with oils or heavy metals or of pasty substances or organic wastes.

**6.** A process as claimed in one or more of claims 1 to 5, wherein waste sludges consist of gypsum sludge, lime sludge, nitrate sludge, nitrite sludge, phosphate sludge or metal sludge and/or the solids content of the sludges is kept constant, and/or waste sludges have a solids content of from 10 to 40% by weight, or from 15 to 35% by weight and/or, when the solids content of the wastes is low, the moisture content is adjusted by adding adsorbents, such as kieselguhr, expanded vermiculite or expanded perlite, and/or waste sludges are prepared from finely divided wastes and aqueous solutions and are employed as components of the mixture, and/or waste sludges are brought to a constant solids content by adding solid, finely divided wastes.

**7.** A process as claimed in any of claims 1 to 6, wherein agglomeration or granulation of the moist material of the wastes is effected by growth granulation using rotary drums or rotating disks or using oscillating screens, and by forced granulation with presses to give pellets or flakes, and comminution of these to give fineparticled wastes in the form of moldings, or by forced granulation using a screw press and comminution of the emerging material.

**8.** A process as claimed in any of claims 1 to 7, wherein the solid wastes are dried by means of hot air or stack gases flowing cocurrent or countercurrent, at a temperature which does not produce any change in the agglomerates or granules or in the fine-particled wastes, and the air saturated with steam is removed.

**9.** A process as claimed in one or more of claims 1 to 8, wherein the agglomerates or granules or particulate wastes are trickled in by controlling the inflowing volume as throughput per unit time, and/or the inlet pipe for trickling in the pretreated solid wastes is raised as the cavity or cavern becomes fuller, and/or the solid pretreated wastes are trickled in periodically and in the intermediate periods liquid wastes or aqueous waste solutions or aqueous solutions or water are introduced in a restricted amount so that the pile of solid wastes is broken up.

**10.** A process as claimed in one or more of claims 1 to 9, wherein, in the periods between trickling in the pretreated wastes onto the volume of wastes which has been trickled in, one or more top layers of higher strength are formed, these layers consisting of bound or hardened materials, and/or greater strength is imparted to the top layers by means of a hydraulic binder, a Sorel binder or a synthetic resin binder, and/or the materials which impart higher strength to the top layers are introduced in dry form into the cavern and reacted only when inside the cavern by adding the aqueous phase or the component which produces hardening.

**11.** A process as claimed in any of claims 1 to 10,

wherein free-flowing moldings, such as agglomerates or granules of relatively high strength, are prepared by adding hardening agents, and cement, Portland cement, Sorel cement, Al phosphate, $NH_4$ phosphate, siliceous earth, finely divided silica, an alkali metal silicate, calcined magnesite (MgO), calcined dolomite (MgO.CaO), quick lime (CaO), waterglass, a synthetic resin, an epoxy resin, a urea, melamine or phenol/formaldehyde resin or a combination of these inorganic and organic substances is used as the hardening agent.

**12.** A process as claimed in one or more of claims 1 to 11, wherein the bulk density (g/l) of the agglomerates or granules is increased by metering in metal wastes, such as iron wastes, or a heavy inorganic material, such as barite, or a heavy metal salt, such as $FeSO_4$.

**13.** A process as claimed in one or more of claims 1 to 12, wherein bactericides are added to wastes and mixtures of wastes which lead to biological activity and hence to the formation of gases, in order to prevent such reactions, and/or dustbinders are added to the solid, trickling moldings in order to avoid or reduce dust formation on landing in the lower volume of the cavity or of the salt cavern, and/or substances having a thixotropic effect, such as bentonites, are metered into the solid, trickling wastes, or such substances themselves are trickled into the cavity or salt cavern and these substances are then converted therein to the thixotropic state by the compressive pressure of the dumped wastes or, if necessary, by introducing aqueous liquids, in order to shift the vertical convergence vectors.

**14.** A process as claimed in one or more of claims 1 to 13, wherein the volume of wastes trickling in is controlled so that the pressure drop as a result of the increasing velocity of fall of the flowing material does not decrease significantly, in order to avoid deposits or vibration of the pipeline, and/or so that the inlet pipe for trickling in the pretreated, solid wastes is kept short in the upper part of the cavity or salt cavern, in order to avoid the formation of piles through a distributing effect due to the weight of the material landing in the lower volume, or to flatten such piles.

**15.** A process as claimed in one or more of claims 1 to 14, wherein the solid wastes are trickled in uniformly and continuously in such a way that laminar flow is maintained in the pipeline and, if necessary, the amount is reduced virtually continuously until the trickling procedure is stopped, in order to avoid producing turbulent flow and caking or blockages.

**16.** A process as claimed in one or more of claims 1 to 15, wherein moldings consisting predominantly of inorganic wastes are brought to a compressive strength of about 30 - 100 $N/cm^2$, measured after from 1 to 3 days, with binders and fine ash, or moldings containing organic wastes are brought to a minimum compressive strength of from more than 2 to 5 $N/cm^2$, measured after from 1 to 8 days, with binders and fine ash and, if appropriate, with inorganic adsorbents, or wastes containing predominantly organic material are converted to free-flowing agglomerates by means of a coating material.

**17.** A process as claimed in one or more of claims 1 to 16, wherein the pretreated wastes trickle in under the force of gravity at a loading of the cross-section of the pipe which is such that this area is loaded only to an extent of 50 - 80% by the equivalent diameter of the trickling moldings, and consequently the pressure drop in the lower part of the downpipe is so small that laminar flow of the material is maintained, and/or a conveying element, such as a curved conveyor belt or a channel, is provided upstream of the trickling wastes before the entrance to the virtually vertical pipeline, if necessary with a limit for the layer height in order to balance or regulate the amount.

**18.** A process as claimed in claim 1, wherein solid wastes are comminuted.

**19.** A process as claimed in claim 1, wherein the moldings are produced by adding binders.

**20.** A process as claimed in claim 1, wherein the moldings are surface-dried or dried completely.

## Revendications

**1.** Procédé pour le prétraitement de déchets solides et à solidifier en vue de l'introduction dans des cavités souterraines salines ou des cavernes de sel par chute libre dans un conduit de chute, caractérisé en ce que l'on mélange des déchets solides ou en particules fines à très fines avec des boues résiduaires dans des proportions relatives telles qu'on obtienne une masse à partir de laquelle on puisse produire des corps moulés, soit par une technique de

granulation, à l'état de granulés, d'agglomérats, de pilules, soit par une technique de compression, à l'état d'écailles qu'on broie en petits morceaux comprimés puis on rejette ces objets moulés capables de ruisseler en chute libre dans la cavité souterraine saline ou la caverne de sel où ils s'accumulent en amas, jusqu'à remplissage pratiquement complet, après quoi on ferme la cavité souterraine saline ou la caverne de sel.

**2.** Procédé selon la revendication 1, caractérisé en ce que les proportions relatives déchets solides/boues résiduaires sont d'environ 60:40 à 95:05, ou de 80:20 % en poids par rapport à la somme des matières comptée pour 100 % en poids.

**3.** Procédé selon une ou plusieurs des revendications 1 et 2, caractérisé en ce que l'on ajoute en tant que liants des solutions aqueuses de sels ou du bitume liquéfié ou de la paraffine liquéfiée ou des dispersions ou émulsions aqueuses de ces substances ou d'une bentonite en fines particules ou de méthylcellulose ou des matières fondues telles que le soufre, ou $MgCl_2$ ou $MgSO_4$ ou de la kieserite ou leurs solutions aqueuses ou les lessives finales de l'industrie de la potasse caustique et le cas échéant on accroit le pouvoir liant des boues résiduaires par addition de liants solides en fines particules.

**4.** Procédé selon l'une des revendications 1 à 3, caractérisé en ce que l'on ajoute aux déchets secs une solution aqueuse de sel en quantité telle que la teneur en humidité de la quantité totale des déchets secs, rapportée à celle-ci, est de 1 à 15 % en poids ou de 2 à 10 % en poids, ou bien on mélange aux déchets solides des boues résiduaires à l'état de suspensions, dispersions, émulsions, solutions, en réglant à la même teneur en matières solides, en sorte que la masse reste humide.

**5.** Procédé selon l'une des revendicaitons 1 à 4, caractérisé en ce que les déchets solides consistent en poussières de filtres, cendres volantes, scories, résidus de combustion d'ordures ménagères ou de combustibles pour génératrices ou d'autres opérations industrielles, ou en sels minéraux contaminés par des substances nocives ou en terre chargée d'huiles ou de métaux lourds ou en matières pâteuses ou en déchets organiques.

**6.** Procédé selon l'une des revendications 1 à 5, caractérisé en ce que les boues résiduaires consistent en boues de plâtre ou de chaux ou de nitrates ou de nitrites ou de phosphates ou de métaux et/ou la teneur en matières solides des boues est réglée uniformément et/ou les boues résiduaires sont à une teneur en matières solides de 10 à 40 % en poids ou de 15 à 35 % en poids et/ou, aux plus faibles teneurs en matières solides dans les déchets, on règle l'humidité de la masse par addition d'agents adsorbants tels que le kieselguhr, la vermiculite expansée, la perlite expansée et/ou on prépare les boues résiduaires à partir de déchets en fines particules ou de solutions aqueuses et on les utilise en tant que composant de mélange et/ou on règle les boues résiduaires par addition de déchets solides en fines particules à une teneur constante en matières solides.

**7.** Procédé selon l'une des revendications 1 à 6, caractérisé en ce que l'agglomération ou la granulation de la masse humide des déchets est réalisée par granulation avec accumulation dans des tambours tubulaires rotatifs à l'aide de plateaux rotatifs ou à l'aide de tamis oscillants et par granulation forcée en pilules ou écailles à l'aide de presses, les pilules ou écailles étant ensuite broyées en petits morceaux comprimés, ou bien la granulation forcée est réalisée au moyen de presses à vis, avec broyage de la masse sortante.

**8.** Procédé selon l'une des revendications 1 à 7, caractérisé en ce que le séchage des déchets solides est réalisé à l'aide d'air chaud ou au moyen de gaz de combustion en courant parallèle ou à contre-courant à une température qui ne provoque pas de modifications des agglomérats ou des granulats ou des déchets en petits morceaux, et l'air est évacué saturé de vapeur d'eau.

**9.** Procédé selon l'une des revendications 1 à 8, caractérisé en ce que la décharge par ruissellement des agglomérats ou granulats ou morceaux de déchets est réalisé par contrôle de la capacité d'alimentation en quantité par unité de temps et/ou en ce que le conduit de décharge des déchets solides prétraités est remonté au fur et à mesure des progrès du remplissage de la cavité ou caverne et/ou la décharge des déchets solides prétraités est réalisée périodiquement et, dans les intervalles, on introduit des déchets liquides et/ou des solutions aqueuses de déchets ou des solutions aqueuses ou de l'eau en quantité limitée, permettant la formation du cône de déchets solides.

**10.** Procédé selon l'une des revendications 1 à 9, caractérisé en ce que, dans les intervalles entre les décharges des déchets prétraités sur le volume de déchets existant, on forme une ou plusieurs couches de couverture à haute résistance mécanique consistant en masses prises ou durcies et/ou on règle les couches de couverture à la résistance mécanique supérieure par liaison hydraulique ou liaison au ciment de Sorel ou liaison par une résine synthétique et/ou on introduit les masses provoquant la plus forte résistance mécanique des couches de couverture à l'état sec dans la caverne dans laquelle on les fait réagir par addition de la phase aqueuse ou du composant provoquant le durcissement.

**11.** Procédé selon l'une des revendications 1 à 10, caractérisé en ce que l'on prépare des corps moulés capables de s'écouler tels des agglomérats, des granulats à haute résistance mécanique par addition de durcisseurs et on utilise en tant que tels du ciment , du ciment Portland, du ciment Sorel, du phosphate d'aluminium, du phosphate d'ammonium, de la silice, de la silide dispersée, un silicate alcalin, de la magnésie calcinée (MgO), de la dolimie calcinée (MgO,CaO), de la chaux calcinée (CaO), une lessive de silicate de sodium, des résines synthétiques, une résine époxydique, des résines d'urée-, de mélamine-, de phénol-formaldéhyde ou une combinaison de ces matières minérales et organiques.

**12.** Procédé selon l'une des revendications 1 à 11, caractérisé en ce que la densité apparente (en g/l) des agglomérats ou granulats est accrue par addition de déchets métalliques tels que des déchets de fer ou d'une masse minérale lourde telle que la barytine ou de sels de métaux lourds tels que $FeSO_4$.

**13.** Procédé selon l'une des revendications 1 à 12, caractérisé en ce que les déchets et leurs mélanges qui conduisent à des activités biologiques et, par suite, à la formation de gaz, sont additionnés de produits bactéricides évitant ces réactions et/ou les corps moulés solides à décharger sont additionnés de liants pour poussières afin d'éviter ou d'amoindrir les formations de poussières à la chute dans le volume inférieur de la cavité ou de la caverne de sel et/ou les déchets solides à décharger sont additionnés de substances à effets thixotropiques telles que les bentonites, ou bien ces dernières substances sont elles-mêmes déchargées dans la cavité ou la caverne de sel et passent alors à l'état thixotropique sous la pression des déchets rejetés ou le cas échéant par introduction de liquides aqueux, évitant alors la déviation des vecteurs de convergence verticaux.

**14.** Procédé selon l'une des revendications 1 à 13, caractérisé en ce que le contrôle de la capacité d'alimentation des déchets déchargés est réglé en sorte que la diminution de pression due à la vitesse croissante de chute de la matière en écoulement ne s'abaisse pas notablement, ceci pour éviter les dépôts dans le conduit ou des oscillations du conduit, et/ou en ce que le conduit d'alimentation pour décharge des déchets solides prétraités est maintenu un court moment dans la partie supérieure de la cavité ou de la caverne de sel, ceci afin d'éviter par un effet de répartition la formation de cônes d'entassement par la force de l'impact dans le volume inférieur ou afin d'aplanir de tels cônes d'entassement.

**15.** Procédé selon l'une des revendications 1 à 14, caractérisé en ce que la décharge uniforme et continue des déchets solides est réalisée de manière à maintenir un écoulement laminaire dans le conduit avec le cas échéant une diminution pratiquement continue du débit jusqu'à cessation de la décharge, ceci afin d'éviter la formation d'un écoulement turbulent, des formations de dépôts ou des bouchages.

**16.** Procédé selon l'une des revendications 1 à 15, caractérisé en ce que les corps moulés consistant principalement en déchets minéraux avec liants et cendres volantes sont réglés à une résistance à la compression d'environ 30 à 100 $N/cm^2$, mesurée au bout de 1 à 3 jours, ou caractérisé en ce que les corps moulés contenant des déchets organiques avec des liants et des cendres volantes et le cas échéant des agents adsorbants minéraux sont réglés à une résistance minimale à la compression supérieure à 2 et allant jusqu'à 5 $N/cm^2$, mesurée au bout de 1 à 8 jours, ou en ce que les déchets consistant principalement en une masse organique sont mis à l'état d'agglomérats capables de s'écouler à l'aide d'une masse d'enrobage.

**17.** Procédé selon l'une des revendications 1 à 16, caractérisé en ce que la décharge en chute libre des déchets prétraités est réalisée à une charge de la section du tube telle que celle-ci ne soit chargée qu'à 50 à 80 % par le diamètre équivalent des corps moulés ruisselants, de sorte que la diminution de pression dans la partie inférieure du tube de chute est faible au

point que la matière reste en écoulement laminaire et/ou en ce que, avant l'entrée dans le conduit pratiquement vertical, les déchets à décharger passent par un organe transporteur tel qu'une bande transporteuse cintrée ou une gouttière, le cas échéant avec limitation de la hauteur de la couche pour équilibrage et réglage du débit.

**18.** Procédé selon la revendication 1, caractérisé en ce que les déchets solides sont broyés.

**19.** Procédé selon la revendication 1, caractérisé en ce que les corps moulés sont formés avec adjonction de liants.

**20.** Procédé selon la revendication 1, caractérisé en ce que les corps moulés sont soumis à séchage partiel ou total.